# EUROPEAN PATENT SPECIFICATION

(11) **EP 2 083 359 B1**
(45) Date of publication and mention of the grant of the patent: **09.06.2010**
(21) Application number: 09158813.7
(22) Date of filing: 30.06.2005
(51) Int. Cl.: G06F 17/30, H04L 29/06, H04L 29/08

(54) **System and method for enhancing network-browsing speed by setting a proxy server on a handheld device**
System und Verfahren zur Erhöhung der Netzwerk-Durchsuchgeschwindigkeit mittels Einstellung eines Proxy-Servers auf einem tragbaren Gerät
Système et procédé pour améliorer la vitesse de navigation dans un réseau en configurant un serveur proxy sur un dispositif portable

(30) Priority: 22.12.2004 US 639077 P
(43) Date of publication of application: 29.07.2009
(62) Divisional of application: 05761641.9
(73) Proprietor: Research In Motion Limited, Waterloo, Ontario N2L 3W8 (CA)
(72) Inventor: Van Geest, Daniel, Waterloo Ontario N2L 3W8 (CA); Maurice, Robbie, Waterloo Ontario N2L 3W8 (CA)
(74) Representative: Roberts, Gwilym Vaughan

(56) References cited:
- EP-A- 1 398 715
- WO-A-01/33804
- WO-A-97/35402
- LEUNG V C M: "Proxy services for the mobile internet" PERSONAL, INDOOR AND MOBILE RADIO COMMUNICATIONS, 2004. PIMRC 2004. 15TH IEEE INTERNATIONAL SYMPOSIUM ON BARCELONA, SPAIN 5-8 SEPT. 2004, PISCATAWAY, NJ, USA,IEEE, vol. 2, 5 September 2004 (2004-09-05), pages 1230-1235, XP010754164 ISBN: 0-7803-8523-3
- ZHANPING YIN ET AL: "A proxy architecture to enhance the performance of WAP 2.0 by data compression" WIRELESS COMMUNICATIONS AND NETWORKING, 2003. WCNC 2003. 2003 IEEE 16-20 MARCH 2003, PISCATAWAY, NJ, USA,IEEE, vol. 2, 16 March 2003 (2003-03-16), pages 1322-1327, XP010639959 ISBN: 0-7803-7700-1

## Description

### TECHNICAL FIELD OF THE APPLICATION

The present application relates generally to handheld devices, and more particularly to systems and methods for enhancing network-browsing speed by setting proxy servers on handheld devices.

### BACKGROUND

Many handheld devices may access the Internet wirelessly with browsers on the handheld devices. Some of them experience inefficiencies in browsing the Internet. One reason is that the data is sent across the air uncompressed. This increases traffic and lowers browsing speed. Another reason is that the browser may have to make multiple requests before it is able to display a single document. For example, a browser may send a HTTP (Hypertext Transfer Protocol) request via a wireless link to a website to request a workpage, the website may send back a response via the wireless link to the browser to say the requested page is at another website, and then the browser must send another request to the website to fetch the page. Requests and response are sent back and forth wirelessly multiple times, slowing browsing speed and delaying webpage delivery. Users may lose patience in accessing a message on the Internet.

Therefore, a need has arisen for increasing browsing speed by setting up proxy server on a handheld device to utilize a wireless connection transport system with one over-the-air request and response.

International Patent Publication No. WO97/35402 discloses a remote proxy system and method. An interface between a protected computer or computer network and the World Wide Web comprises a split proxy system that encapsulates TCP/IP transmissions into a script transmission which is not subject to problems in high latency systems. The split proxy interface also provides compression, encryption and filtering capabilities and allows receipt of unsolicited transmissions from the service provider for such purposes as automatically updating or configuring WWW access software.

International Patent Publication No. WO01/33804 discloses a system and method for effective use of a link between mobile station and gateway service. The method provides that a mobile station transmits to a gateway server a request for a content and/or a resource located on a web server using a first protocol. The gateway server then transmits the request to the web server using a second protocol that is compatible with that used by the web server. The gateway server receives a redirection message from the web server indicating a new location of the content and/or resource. Ultimately, the requested content and/or resource is transmitted to the mobile station.

### SUMMARY

The invention is defined in the independent claims. Some optional features are defined in the dependent claims.

A system for enhancing network-browsing speed by setting a proxy server on a handheld device comprises a browser for sending a request for requesting a message from a website and receiving a response in reponse to the request, a proxy server for transcoding and compressing the request, and transcoding and decompressing the response including the requested message in response to the request, a wireless network communicably linked to the proxy server, Mobile Data Service (MDS) gateway for transcoding and decompressing the request, and transcoding and compressing the response including the requested message from the website.

In one aspect, the MDS gateway further receives a redirect response including an address of the requested message, sends a redirect request for requesting the message from the address and receive the requested message if there is no requested message at the website. The proxy server sends a notification to the browser with respect to the redirect occurred in the MDS gateway. The browser sends a request to the proxy server for requesting the requested message, and the proxy server sends the requested message to the browser.

In one embodiment, a cache is provided in the proxy server for caching images embedded in an HTML response. When the browser requests the images after it examines the HTML response, the proxy will return these images from the cache. MDS gateway transcodes and compresses the HTML response and embedded the images to reduce the number of wireless transactions.

In a further embodiment, the proxy processes a request from browser to add headers for identifying the handheld device's screen dimension and numbers of colors and requesting MDS gateway to resize images to fit the screen dimension. The cache stores the resized images for the browser to request. MDS gateway reducers the image's size before sending image wirelessly to increase network-browsing speed.

### BRIEF DESCRIPTION OF THE DRAWINGS

For a more complete understanding of the features and advantages of the present system and method, reference is now made to the detailed description along with the accompanying figures in which corresponding numerals in the different figures refer to corresponding parts and in which:
Figure 1 shows an exemplary handheld device which communicates with websites over a wireless network by multiple requests and responses according to prior art;
Figure 2 shows a wireless connection transport system in which the present application may be implemented wherein one request and one response are sent wirelessly;
Figure 3 is a block diagram or an embodiment wherein the handheld device of figure 1 implements one request and one response to be sent wirelessly by setting up a proxy server in the handheld device and operating in the wireless connection transport architecture of figure 2 according to this application;
Figure 4 is a flowchart of a method for implementing one request and one response sent wirelessly according to a first embodiment of this application;
Figure 5 is a flowchart showing an embodiment of the method of carrying out the step 420 of Figure 4;
Figure 6 is a flowchart showing an embodiment of the method of carrying out the step 425 of Figure 4;
Figure 7 is a block diagram wherein a proxy server caches images included in a response according to a second embodiment of this application; and
Figure 8 is a flowchart of a method for implementing one request and one response sent wirelessly according to the second embodiment, of this application.

### DETAILED DESCRIPTION

There is a wireless connection transport architecture which implements one request and one response to be sent wirelessly with Mobile Data Service (MDS). The present application implements a handheld device which may perform multiple requests during accessing Internet to operate in the above wireless connection transport architecture so that a browser on the handheld device accesses Internet with one over-the-air request and response. Therefore, there is a need to interface the browser to the above wireless connection transport architecture. Since most browsers allow their connections to be routed through a proxy, a proxy is set in the handheld device to make the browser to access Internee by means of the above wireless connection transport architecture.

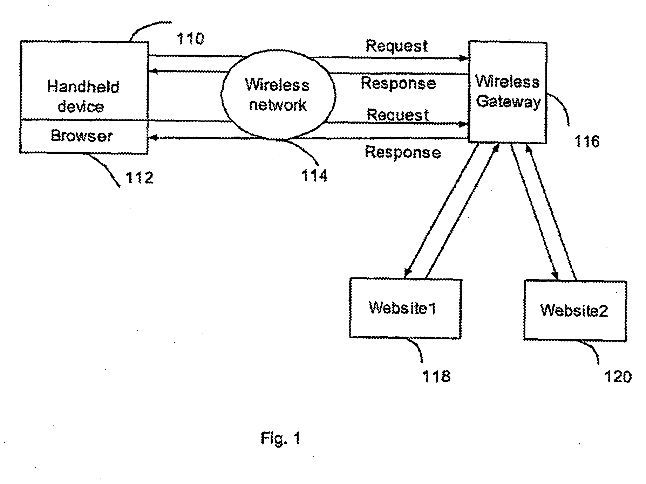

Figure 1 briefly shows a traditional wireless network that a handheld device communicates with websites by multiple requests according to prior art. Handheld device 110 communicates with wireless gateway 116 via a wireless network 114, Browser 112 in the handheld device 110 sends a HTTP request to website 118 via wireless gateway 116. Website 118 may send a response to browser 112 via wireless gateway 116 to say the requested message is on website 120. Browser 112 sends another request to website 120 to fetch the requested message. Multiple requests and responses are sent in the air to make browsing slow and low efficiency.

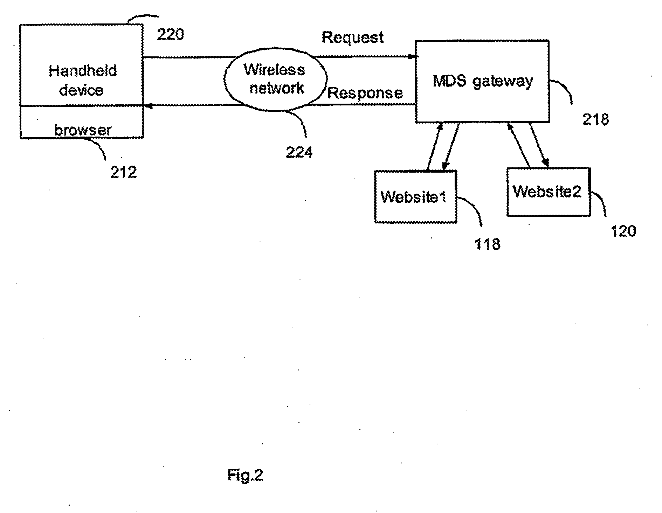

Figure 2 shows a wireless connection transport system in which the present application may be implemented wherein one request and one response are sent wirelessly. Browser 212 sends a request to MDS gateway 218. MDS Gateway 218 receives a response from website 118 and sends the response to browser 212 by means of MDS gateway 218. If the requested data is not available from website 118, MDS gateway 218 receives a redirect response from website 118, which points it to website 120. MDS gateway 218 then sends a request to website 120 to fetch the requested data. MDS gateway 218 sends one final response to handheld device 220. As shown in this figure 2, one request and one response are sent via the wireless network 224.

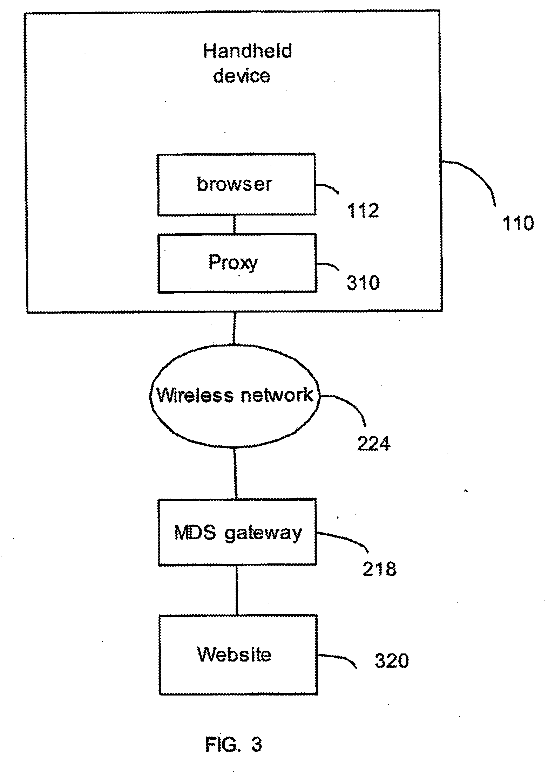

Figure 3 illustrates a block diagram of an embodiment wherein the handheld device of figure 1 implements one request and one response to be sent wirelessly by setting a proxy server on the handheld device and operating in the wireless connection transport system of figure 2 according to this application. As shown in figure 3, browser 112 operates on handheld device 110. Proxy server 310 is set on the handheld device. Which communicates with MDS gateway 218 via wireless network 224. Proxy server 310 receives a HTTP request, transcodes and compresses it to reduce bandwidth and forwards it to MDS Gateway 218. After processing the request, MDS gateway 218 sends the request to website 320 and website 320 sends a response to MDS gateway 218. MDS gateway 218 may process the response, for example, by transcoding and compressing, and sends the response to proxy 310. Proxy 310 processes the response and sends it to browser 112. If there is a redirect response and a redirect request occurred in MDS gateway 218, MDS gateway 218 receives a redirect response including an actual address of the requested message, sends a request for requesting the redirected response, and receives the requested message. MDS gateway 218 may process the requested message such as by transcoding and compressing and return it to proxy 310. Proxy 310 may process the requested message such as by transcoding and decompressing. Proxy 310 further sends a signal to notify browser 112 that the requested message does not exist at website 320 and a redirect occurred in MDS gateway 218, receives a request signal from browser 112 for requesting the redirected message, and then sends the requested message to browser 112. Proxy 310 may decompress and transcode the responses if the response was transcoded and compressed. Therefore, one request and one response occur wirelessly. Redirect occurs between MDS gateway 218 and websites and subsequently between browser 112 and proxy 310 within handheld device 110. It does not occur wirelessly. MDS gateway may perform many types of transcoding, for example, it tokenizes HTTP headers to reduce bandwidth, transcodes images in order to reduce bandwidth and make them fit a small screen, transcodes HTML to reduce bandwidth, and send HTML and images together in one response to save the handheld from having to make multiple wireless requests.

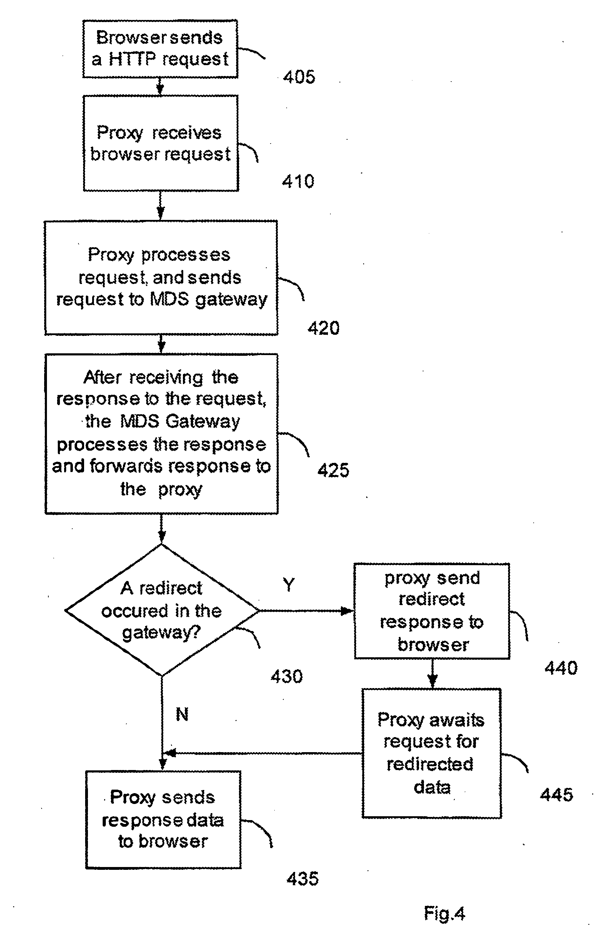

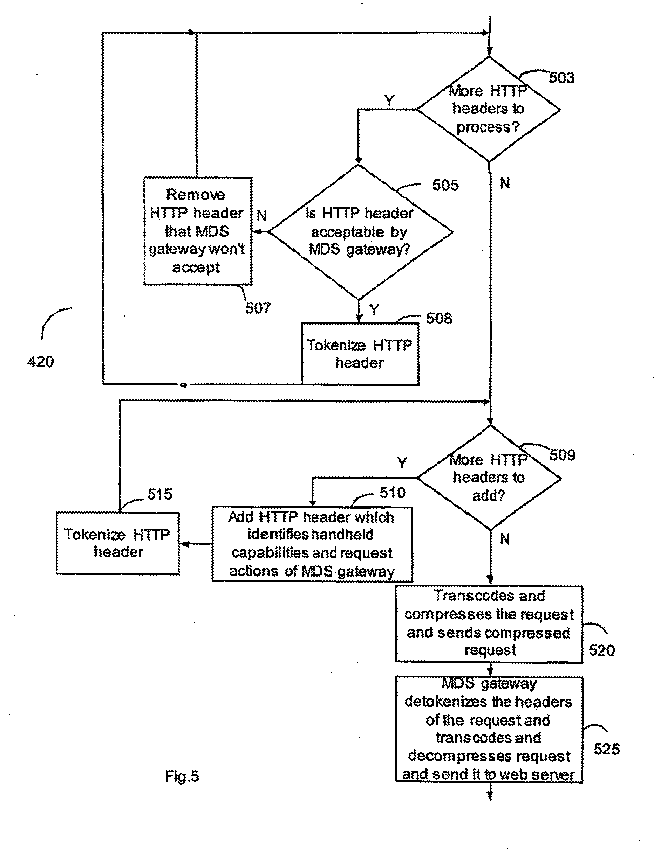

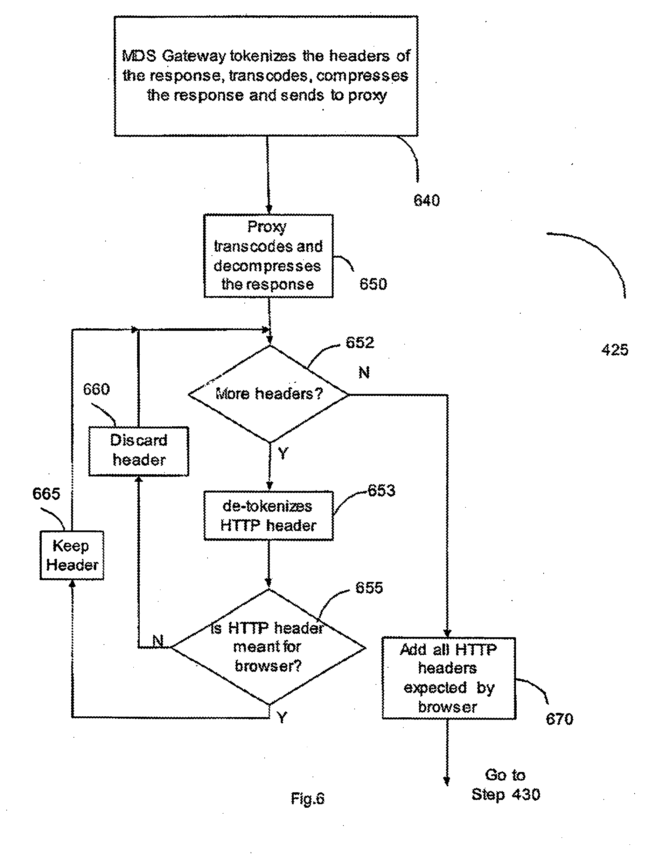

Figure 4 is a flowchart showing a first embodiment of a method for implementing one request and one response sent wirelessly. Browser 112 sends a HTTP request for a message at a website 320 at step 405, and proxy server 310 receives the HTTP request at step 410. At step 420. proxy server 310 processes the header of the request so that MDS gateway 218 accepts the request, transcodes and compresses the request, and then proxy server 310 sends the request to MDS gateway 218. At step 425, MDS gateway 218 receives response data from the website 320, processes the response, and sends the response to proxy server 310. The details of steps 420 and 425 will be further described in figure 5 and Figure 6. At step 430, it is determined if a redirect has occurred in the gateway. If no, proxy server 310 sends the requested message response data to browser 112 at step 435. MDS gateway 218 also processes a redirect when the requested message is not at website 320. MDS gateway 218 receives a redirect response including an actual address of the requested message from a server (not shown), and sends a redirect request for requesting the requested message from the address, and then MDS gateway 218 receives the requested message. This redirect does not happen wirelessly. If a redirect occurred in MDS gateway 218, proxy server 310 sends a notification signal containing the actual address of the requested message to browser 112 and notifies there is a redirect occurred in MDS gateway 218 at step 440, and receives a request signal for requesting the redirected data from browser 112 at step 445, and then proxy server 310 sends the requested message to browser 112 at step 435. The redirected message may be processed in MDS gateway 218 and proxy server 310 at step 425 as described with reference to figure 6 in detail.

These multiple requests resulted from a redirect occur between proxy server 310 and browser 112 within handheld device 110. It does not happen wirelessly. Therefore, the browsing speed is enhanced.

Figure 5 is a flowchart showing an embodiment of the method of carrying out the step 420 of Figure 4. A HTTP request may have one or more header fields, and each field includes a header. A HTTP request may not have any header field. Each HTTP header field is examined individually. At step 503, it is determined if there are more HTTP header fields to be processed. If not, the process proceeds to 509. If there is any HTTP header field to be processed, it proceeds to 503where proxy server 310 reads a HTTP header field and determines if the HTTP header of the HTTP header field is accepted by MDS gateway 218. If yes, proxy server 310 tokenizes the header at 508 and then the process returns to 503. If the HTTP header is not accepted, the HTTP header is removed at step 507, and the process returns to 503. When all the headers in the header fields have been processed, the processes goes to 509 where it is determined if there are HTTP headers required by MDS gateway 218 to be added. If there is any HTTP headers required to be added, the process goes to 510 where a HTTP header which identifies the handheld device capabilities and requests actions of MDS gateway 218 is added, and at 515, the HTTP header is tokenized. If there are no more headers to be added, at step 520, proxy server 310 transcodes and compresses the HTTP request to reduce the amount of data sent over the air. At step 525, MDS gateway 218 de-tokenizes the HTTP headers of the request, decompresses and transcodes the request and sends it to a website.

Figure 6 is a flowchart showing an embodiment of the method of carrying out the step 425 of Figure 4. MDS gateway 218 receives requested response data from a website, tokenizes the HTTP headers of the response, transcodes and compresses the requested response data and sends it to the proxy 310 wirelessly at step 640. The proxy 310 decompresses the requested response at step 650. The HTTP headers in HTTP header fields are examined. At step 652, it is determined if there is any HTTP header included in the requested response to be examined, and if there is no HTTP headers to be examined, the process proceeds to 670 where any extra headers that the browser expects are added and then proceeds to step 430. If there are more headers to be examined, one unexamined HTTP header is read and is de-tokenized at step 653. At step 655, it is determined if the HTTP header is accepted by the browser 112, and the process goes to step 660 where the HTTP header is discarded if the header is not accepted by the browser 112, or goes to 665 where the header is kept if the header is accepted by the browser 112. The next header is then examined at step 652 again until all headers are examined.

In this embodiment, the requested response may be an HTML, XML, WML, or other response, and may include one or more images, webpages, documents, or a combination of document and image.

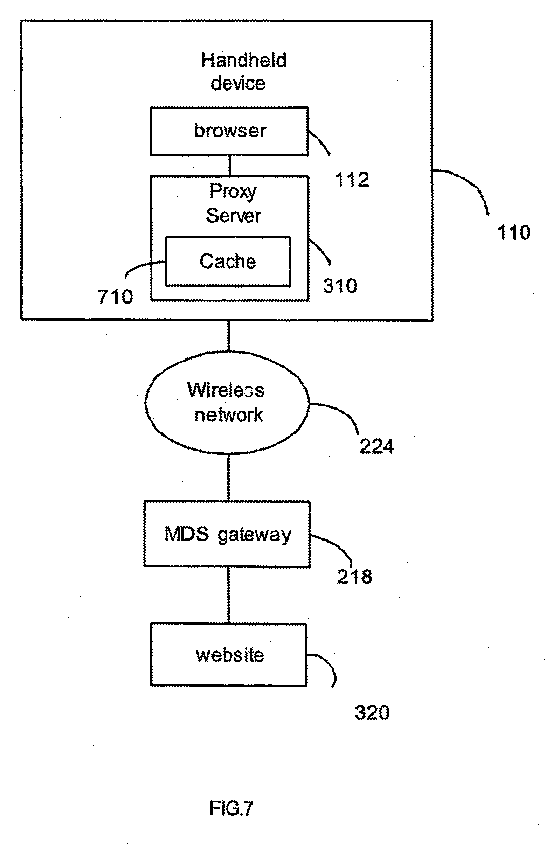

Figure 7 is a block diagram wherein a proxy server stores images included in a response according two a second embodiment of this application. The MDS Gateway may send a response including multiple documents such as a text document and images. For example, a response may include an HTML page and one or more images referenced in the HTML page. When a browser receives the HTML response, after checking the response, it may send another request to fetch images over the air. In this embodiment, a cache 710 is provided in proxy serveur 310 for storing images that were embedded in the response. When the browser requests images after checking the response, the proxy 310 sends the images without having to make another over-the-air request, so it makers browsing fast. As shown Figure 7, cache 710 is set in the proxy server 310 for storing images in a response.

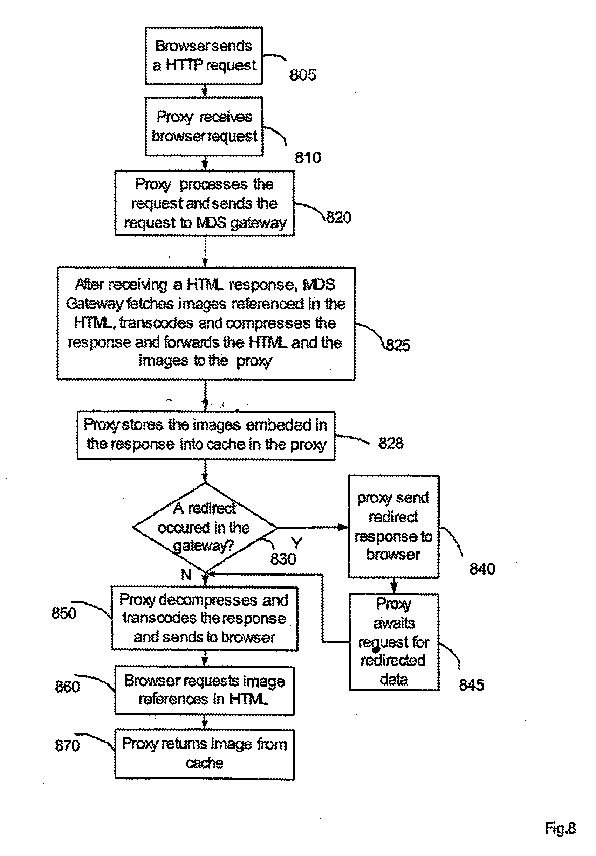

Figure 8 is a flowchart of a method for implementing one request and one response sent wirelessly according to the second embodiment of this application, as shown in figure 7. Browser 112 sends an HTTP request for a message at website 320 at step 805, and proxy server 310 receives the HTTP request at step 810. The proxy 310 processes the request and sends the request to MDS gateway 218 at step 820. The process of step 820 is same as that of step 420 shown in figure 5. At step 825, MDS gateway 218 receives an HTTP response such was an HTML response and fetches any images referenced in the HTML, transcodes and compresses the response to reduce the amount of data and bandwidth, and sends the response data including HTML documents and images to the proxy server 310 The process of step 825 is similar to step 425 shown in figure 6 where the headers of the HTTP response are processed. Proxy 310 stores the images embedded in the response into cache 710 at step 828. At step 830, it is determined if a redirect occurred in the gateway. If a redirect occurred in the gateway, proxy server 310 sends a notification signal including the actual location of the requested massage to the browser 112 and notifies it that a redirect occurred in MDS gateway 218 at step 840, and receives a request for redirected data from browser 112 at step 845. This notification signal and the request signal for redirected data between proxy server 310 and browser 112 occur within handheld device, and do not happen wirelessly. Therefore, the network-browsing speed is increased. At step 850, proxy 310 decompresses and transcodes the response back into its original format such as HTML format, and then sends the response to browser 112. The browser 112 then requests an image referenced in the HTML response at step 860, and the proxy 310 finds the image in cache 710 at step 870, so it sends this image data and avoids a wireless request.

In this embodiment, the MDS gateway transcodes and compresses the HTML response, it allows only one over-the-air request and response for multiple documents which may include HTML pages and images. Alternatively, the response in this embodiment may be a WML, XML or other existing webpage response format.

In one embodiment, browser 112 may request an image document that only includes one or more images. MDS gateway 218 sends the requested images, and caches 710 stores the requested images for browser 112 to request the images within handheld device. This avoids image transmission wirelessly.

In a further embodiment, MDS gateway 218 may resize the requested images to fit the handheld device's screen capabilities. In this embodiment, at step 510 of figure 5, the headers which identify handheld device's screen dimensions and/or number of colors and request MDS gateway 218 to resize images are added. MDS gateway 218 utilizes the headers to resize the requested images. MDS gateway 218 sends the requested image in a response, either by itself or embedded in a HTTP response or a text, depending on what was requested by browser 112. Proxy server 310 caches images if browser 112 requested the image only or requested embedded images in a HTTP response or a text, and then proxy server 310 just returns the image to browser 112 when browser 112 requests the image. This saves a lot of bandwidth since large images may be reduced before they are transmitted wirelessly, avoids multiple transmission of images wirelessly, and increases the network browsing sped.

The requests from the browser and responses from website as described above are not limited to HTTP requests and HTTP responses, and they may be any TCP (transmission control protocol) request and response, and any UDP (User Datagram Protocol) request and response. Those skilled in the art will appreciate that TCP request and response include, but not limited to HTTP, FTP (file transfer protocol), Telnet, Finger, SSH (secure shell), DNS (Domain Name Server), POP3/IMAP, SMTP, Gopher, BGP (Border Gateway Protocol), Time/NTP, whois, TACACS+, SSL (Secure Sockets Layer), RTSP (Real-time Streaming Protocol), LDAP (Directory Access Protocol).

In another embodiment, there is provided a system for enhancing network-browsing speed by setting a proxy server on a handheld device, comprising:
a browser operating on the handheld device for sending a request for requesting a message from a website and receiving a response in response to the request;
a proxy server provided on the handheld device for transcoding and compressing the request, and transcoding and decompressing the response including the requested message in response to the request;
a wireless network communicably linked to the proxy server; and
a Mobile Data Service (MDS) gateway communicably linked to the wireless network for transcoding and decompressing the request, and transcoding and compressing the response including the requested message from the website.

Optionally, if there is no requested message at the website:
the MDS gateway receives a redirect response including an address of the requested message, sends a redirect request for requesting the message from the address and receives the requested message;
the proxy server sends a notification to the browser with respect to the redirect occurring in the MDS gateway;
the browser sends a request to the proxy server for requesting the requested message; and
the proxy server sends the requested message to the browser.

Optionally the request includes multiple headers, the proxy server examines headers of the request individually, removes the header not acceptable by the MDS gateway, adds the header acceptable by the MDS gateway, and tokenizes the header.

Optionally the MDS gateway de-tokenizes the headers of the request.

Optionally the MDS gateway tokenizes the header of the response.

Optionally the response includes multiple headers, the proxy server examines each header individually, de-tokenizes each header, removes the header not acceptable by the browser, and adds the header acceptable by browser.

Optionally the request for requesting the message is a protocol request using TCP connection.

Optionally the request for requesting the message is a protocol request using UDP.

In another embodiment, there is provided a method for enhancing network-browsing speed by setting a proxy server on a handheld device, comprising:
sending a request for requesting a message from a website by a browser operating on the handheld device;
transcoding and compressing the request by the proxy server;
sending the request to a MDS gateway via a wireless network;
transcoding and decompressing the request by the MDS gateway;
receiving a response from the website by the MDS gateway;
transcoding and compressing the response by the MDS gateway;
sending the response to the proxy server via the wireless network;
transcoding and decompressing the response by the proxy server; and
receiving the response by the browser

Optionally, the method further comprises if the requested message is not at the website, receiving a redirect response including an address of the requested message by the MDS gateway, sending a redirect request for requesting the requested message from the address by the MDS gateway; and
receiving a response including the requested message by the MDS gateway;

Optionally the method further comprises:
sending a notification from the proxy server to the browser including an address of the requested message and an indication that the requested message is not at the website;
receiving at the proxy server a request for requesting the requested message from the browser; and
sending the response including the requested message to the browser by the proxy server.

Optionally, before the step of transcoding and compressing the request by the proxy server, the method further comprises:
examining the headers of the request;
removing the header not acceptable by the MDS gateway;
adding the header acceptable by MDS gateway; and
tokenizing the header.

Optionally, before the step of transcoding and decompressing the request by the MDS gateway, the method further comprises de-tokenizing the headers of the request.

Optionally, before the step of transcoding and compressing the response by the MDS gateway, the method further comprises tokenizing the headers of the response.

Optionally, after the step of transcoding and decompressing the response by the proxy server, the method further comprises:
examining the headers of the response;
de-tokenizing the headers;
removing the header not acceptable by the browser; and
adding the header acceptable by browser.

Optionally, the request is a protocol request using a TCP connection.

Optionally, the request is a protocol request using UDP.

## Claims

1. A system for enhancing network-browsing speed by setting a proxy server (310) on a handheld device (110, 220), comprising:
a browser (112, 212)operating on the handheld device arranged to send a request for requesting a message from a first website (118);
the proxy server provided on the handheld device;
a wireless network (224) communicably linked to the proxy server; and
a Mobile Data Service gateway (218) communicably linked to the wireless network, wherein said Mobile Data Service gateway is arranged to receive said request from said proxy server and send said request to said first website, and
wherein said Mobile Data Service gateway is arranged to receive a response from said first website;
wherein, if said message is not available from the first website the system is arranged such that:
the response will comprise a redirect response including an address of the message;
the Mobile Data Service gateway is arranged to send a redirect request to a second website (120) at said address arranged to request the message there from and in response thereto arranged to receive the message;
the Mobile Data Service gateway is arranged to send the message to the proxy server via the wireless network;
the proxy server is arranged to receive the message and send a notification to the browser that indicates that a redirect has occurred in the Mobile Data Service gateway and that includes the address;
the browser is arranged to send a second request to the proxy server requesting the message;
in response to said second request, the proxy server is arranged to send the message to the browser.

2. The system of claim 1, wherein the request includes multiple headers, and wherein the proxy server is arranged to: examine headers of the request individually, remove any of the headers from the request not acceptable by the Mobile Data Service gateway, add to the request any new headers required by the Mobile Data Service gateway, and tokenize the headers remaining in the request and the new headers added to the request.

3. The system of claim 2, wherein the Mobile Data Service gateway is arranged to de-tokenize the headers remaining in the request and the new headers added to the request.

4. The system of claim 1, wherein the message received by the Mobile Data Service gateway includes one or more headers, and wherein the Mobile Data Service gateway is arranged to tokenize the headers of the message.

5. The system of claim 1, wherein the message received by the proxy server includes multiple headers, and wherein prior to sending the message to the browser the proxy server is arranged to: examine each header of the message individually, de-tokenize each header of the message, remove any of the headers of the message not acceptable by the browser, and add any new headers expected by browser to the message.

6. The system of claim 1, wherein the request for requesting the message is a protocol request using TCP connection.

7. The system of claim 1, wherein the request for requesting the message is a protocol request using UDP.

8. A method for enhancing network-browsing speed by setting a proxy server (310) on a handheld device (110, 220), comprising:
sending a request for requesting a message from a first website (118) from a browser (112, 212) operating on the handheld device to said proxy server;
sending the request from the proxy server to a Mobile Data Service gateway(218) via a wireless network (224);
sending the request from the Mobile Data Service gateway to said first website;
receiving a response from the first website at the Mobile Data Service gateway(218), wherein if the message is not available from the first website:
said response will comprise a redirect response including an address of the message, and said method further comprises:
sending a redirect request requesting the message to a second website (120) at said address by the Mobile Data Service gateway and in response thereto receiving the message at the intermediary server; and
sending the message from the Mobile Data Service gateway to the proxy server via the wireless network; and
sending a notification including the address of the message from the proxy server to the browser indicating that a redirect occurred in the Mobile Data Service gateway; and
receiving a second request from the browser at the proxy server requesting the message and in response thereto sending the message to the browser.

9. The method of claim 8, wherein the request includes multiple headers, and wherein the method further comprises in the proxy server:
examining each of the headers of the request;
removing any of the headers from the request not acceptable by the Mobile Data Service gateway;
adding to the request any new headers required by the Mobile Data Service gateway; and
tokenizing the headers remaining in the request and the new headers added to the request.

10. The method of claim 9, further comprising in the Mobile Data Service gateway de-tokenizing the headers remaining in the request and the new headers added to the request.

11. The method of claim 8, wherein the message received by the Mobile Data Service gateway includes one or more headers and wherein the method further comprises tokenizing the headers of the message in the Mobile Data Service gateway.

12. The method of claim 11, wherein the method further comprises in the proxy sever;
examining each of the headers of the message;
de-tokenizing each of the headers of the message;
removing any of the headers of the message not acceptable by the browser; and adding any new headers expected by browser to the message.

13. The method of claim 8, wherein the request is a protocol request using a TCP connection.

14. The method of claim 8, wherein the request is a protocol request using UDP.

## Patentansprüche

1. System zum Verbessern einer Netzwerk-Browsing-Geschwindigkeit durch Einstellung eines Proxy-Servers (310) auf einer handgehaltenen Vorrichtung (110, 220), das aufweist:
einen Browser (112, 212), der auf der handgehaltenen Vorrichtung arbeitet, der ausgebildet ist, eine Anforderung zum Anfordern einer Nachricht von einer ersten Webseite (118) zu senden;
ein Proxy-Server, der auf der handgehaltenen Vorrichtung vorgesehen ist; ein drahtloses Netzwerk (224), das mit dem Proxy-Server kommunikationsfähig verbunden ist; und
ein "Mobile Data Service"-Gateway (218), das mit dem drahtlosen Netzwerk kommunikationsfähig verbunden ist, wobei das "Mobile Data Service"-Gateway ausgebildet ist, die Anforderung von dem Proxy-Server zu empfangen und die Anforderung an die erste Webseite zu senden, und
wobei das "Mobile Data Service"-Gateway ausgebildet ist, eine Antwort von der ersten Webseite zu empfangen;
wobei, wenn die Nachricht von der ersten Webseite nicht verfügbar ist, das System derart ausgebildet ist, dass:
die Antwort eine Um- bzw. Weiterleiten-Antwort aufweist, die eine Adresse der Nachricht umfasst;
das "Mobile Data Service"-Gateway ausgebildet ist, eine Um- bzw. Weiterleiten-Anforderung an eine zweite Webseite (120) an der Adresse zu senden, die ausgebildet ist, die Nachricht davon anzufordern, und in Reaktion darauf ausgebildet ist, die Nachricht zu empfangen;
das "Mobile Data Service"-Gateway ausgebildet ist, die Nachricht über das drahtlose Netzwerk an den Proxy-Sender zu senden;
der Proxy-Sender ausgebildet ist, die Nachricht zu empfangen und eine Benachrichtigung an den Browser zu senden, die anzeigt, dass eine Um- bzw. Weiterleitung in dem "Mobile Data Service"-Gateway stattgefunden hat und die die Adresse umfasst;
der Browser ausgebildet ist, eine zweite Anforderung an den Proxy-Server zu senden, die die Nachricht anfordert;
in Reaktion auf die zweite Anforderung, der Proxy-Server ausgebildet ist, die Nachricht an den Browser zu senden.

2. System gemäß Anspruch 1, wobei die Anforderung mehrere Header umfasst und wobei der Proxy-Server ausgebildet ist zum: einzelnen Überprüfen von Headers der Anforderung, Entfernen der Header aus der Anforderung, die durch das "Mobile Data Service"-Gateway nicht akzeptabel sind, Hinzufügen zu der Anforderung von neuen Headers, die durch das "Mobile Data Service"-Gateway erforderlich sind, und in Token Übersetzen bzw. Tokenisieren der Header, die in der Anforderung bleiben, und der neuen Header, die zu der Anforderung hinzugefügt werden.

3. System gemäß Anspruch 2, wobei das "Mobile Data Service"-Gateway ausgebildet ist, die Header, die in der Anforderung bleiben, und die neuen Header zu de-tokenisieren, die zu der Anforderung hinzufügt sind.

4. System gemäß Anspruch 1, wobei die Nachricht, die durch das "Mobile Data Service"-Gateway empfangen wird, einen oder mehrere Header umfasst, und wobei das "Mobile Data Service"-Gateway ausgebildet ist, die Header der Nachricht zu tokenisieren.

5. System gemäß Anspruch 1, wobei die Nachricht, die durch den Proxy-Server empfangen wird, mehrere Header umfasst, und wobei vor einem Senden der Nachricht an den Browser der Proxy-Server ausgebildet ist zum: einzelnen Überprüfen jedes Headers der Nachricht, De-tokenisieren jedes Headers der Nachricht, Entfernen von Headern der Nachricht, die durch den Browser nicht akzeptabel sind, und Hinzufügen von neuen Headern, die durch den Browser erwartet werden, zu der Nachricht.

6. System gemäß Anspruch 1, wobei die Anforderung zum Anfordern der Nachricht eine Protokoll-Anforderung unter Verwendung einer TCP-Verbindung ist.

7. System gemäß Anspruch 1, wobei die Anforderung zum Anfordern der Nachricht eine Protokoll-Anforderung unter Verwendung von UDP ist.

8. Verfahren zum Verbessern einer Netzwerk-Browsing-Geschwindigkeit durch Einstellung eines Proxy-Servers (310) auf einer handgehaltenen Vorrichtung (110, 220), das aufweist:
Senden einer Anforderung zum Anfordern einer Nachricht von einer ersten Webseite (118) von einem Browser (112, 212), der auf der handgehaltenen Vorrichtung arbeitet, an den Proxy-Server;
Senden der Anforderung von dem Proxy-Server über ein drahtloses Netzwerk an ein "Mobile Data Service"-Gateway (218);
Senden der Anforderung von dem "Mobile Data Service"-Gateway an die erste Webseite;
Empfangen einer Antwort von der ersten Webseite an dem "Mobile Data Service"-Gateway, wobei, wenn die Nachricht von der ersten Webseite nicht verfügbar ist:
die Antwort eine Um- bzw. Weiterleiten-Antwort aufweist, die eine Adresse der Nachricht umfasst, und das Verfahren weiter aufweist:
Senden einer Um- bzw. Weiterleiten-Anforderung, die die Nachricht anfordert, an eine zweite Webseite (120) an der Adresse durch das "Mobile Data Service"-Gateway, und in Reaktion darauf, Empfangen der Nachricht an dem dazwischenliegenden Server; und
Senden der Nachricht von dem "Mobile Data Service"-Gateway über das drahtlose Netzwerk an den Proxy-Sender; und
Senden einer Benachrichtigung, die die Adresse der Nachricht umfasst, von dem Proxy-Sender an den Browser, die anzeigt, dass eine Um- bzw. Weiterleitung in dem "Mobile Data Service"-Gateway stattgefunden hat; und
Empfangen einer zweiten Anforderung von dem Browser an dem Proxy-Server, die die Nachricht anfordert, und in Reaktion darauf Senden der Nachricht an den Browser.

9. Verfahren gemäß Anspruch 8, wobei die Anforderung mehrere Header umfasst und wobei das Verfahren weiter in dem Proxy-Server aufweist:
Überprüfen jedes Headers der Anforderung;
Entfernen der Header aus der Anforderung, die durch das "Mobile Data Service"-Gateway nicht akzeptabel sind;
Hinzufügen zu der Anforderung von neuen Headers, die durch das "Mobile Data Service"-Gateway erforderlich sind; und
Tokenisieren der Header, die in der Anforderung bleiben, und der neuen Header, die zu der Anforderung hinzugefügt werden.

10. Verfahren gemäß Anspruch 9, das weiter aufweist, in dem "Mobile Data Service"-Gateway, ein De-tokenisieren der Header, die in der Anforderung bleiben, und der neuen Header, die zu der Anforderung hinzufügt sind.

11. Verfahren gemäß Anspruch 8, wobei die Nachricht, die durch das "Mobile Data Service"-Gateway empfangen wird, einen oder mehrere Header umfasst, und wobei das Verfahren weiter aufweist ein Tokenisieren der Header der Nachricht in dem "Mobile Data Service"-Gateway.

12. Verfahren gemäß Anspruch 11, wobei das Verfahren weiter in dem Proxy-Server aufweist:
Überprüfen jedes Headers der Nachricht;
De-tokenisieren jedes Headers der Nachricht;
Entfernen von Headern der Nachricht, die durch den Browser nicht akzeptabel sind; und
Hinzufügen von neuen Headern, die durch den Browser erwartet werden, zu der Nachricht.

13. Verfahren gemäß Anspruch 8, wobei die Anforderung eine Protokoll-Anforderung unter Verwendung einer TCP-Verbindung ist.

14. Verfahren gemäß Anspruch 8, wobei die Anforderung eine Protokoll-Anforderung unter Verwendung von UDP ist.

## Revendications

1. Système pour améliorer la vitesse de navigation sur un réseau en installant un serveur mandataire (310) sur un dispositif portatif (110, 220), comprenant :
un navigateur (112, 212) opérant sur le dispositif portatif agencé pour envoyer une requête pour demander un message d'un premier site Web (118) ;
le serveur mandataire pourvu sur le dispositif portatif ; un réseau sans fil (224) connecté en communication au serveur mandataire ; et
une passerelle de Service de Données Mobile (218) connectée en communication au réseau sans fil, où ladite passerelle de Service de Données Mobile est agencée pour recevoir ladite requête dudit serveur mandataire et pour envoyer ladite requête audit premier site Web, et
où ladite passerelle de Service de Données Mobile est agencée pour recevoir une réponse dudit premier site Web ;
où, si ledit message n'est pas disponible à partir du premier site Web, le système est agencé de sorte que :
la réponse englobe une réponse de redirection comportant une adresse du message ;
la passerelle de Service de Données Mobile est agencée pour envoyer une requête de redirection à un deuxième site Web (120) à ladite adresse agencée pour lui demander le message et en réponse à celle-ci agencée pour recevoir le message ;
la passerelle de Service de Données Mobile est agencée pour envoyer le message au serveur mandataire par le biais du réseau sans fil ;
le serveur mandataire est agencé pour recevoir le message et pour envoyer une notification au navigateur qui indique qu'une redirection s'est produite dans la passerelle de Service de Données Mobile et qui comporte l'adresse ;
le navigateur est agencé pour envoyer une deuxième requête au serveur mandataire demandant le message ;
en réponse à ladite deuxième requête, le serveur mandataire est agencé pour envoyer le message au navigateur.

2. Système de la revendication 1, dans lequel la requête comporte plusieurs en-têtes, et où le serveur mandataire est agencé pour : examiner des en-têtes de la requête individuellement, retirer de la requête tout en-tête qui n'est pas accepté par la passerelle de Service de Données Mobile, ajouter à la requête tous nouveaux en-têtes demandés par la passerelle de Service de Données Mobile, et marquer les en-têtes restants dans la requête et les nouveaux en-têtes ajoutés à la requête.

3. Système de la revendication 2, dans lequel la passerelle de Service de Données Mobile est agencée pour démarquer les en-têtes restants dans la requête et les nouveaux en-têtes ajoutés à la requête.

4. Système de la revendication 1, dans lequel le message reçu par la passerelle de Service de Données Mobile comporte un ou plusieurs en-têtes, et où la passerelle de Service de Données Mobile est agencée pour marquer les en-têtes du message.

5. Système de la revendication 1, dans lequel le message reçu par le serveur mandataire comporte plusieurs en-têtes, et où avant d'envoyer le message au navigateur, le serveur mandataire est agencé pour : examiner chaque en-tête du message individuellement, démarquer chaque en-tête du message, retirer tout en-tête du message qui n'est pas accepté par le navigateur, et ajouter tous nouveaux en-têtes attendus par le navigateur au message.

6. Système de la revendication 1, dans lequel la requête demandant le message est une requête de protocole utilisant une connexion TCP.

7. Système de la revendication 1, dans lequel la requête demandant le message est une requête de protocole utilisant un protocole UDP.

8. Procédé pour améliorer la vitesse de navigation sur un réseau en installant un serveur mandataire (310) sur un dispositif portatif (110, 220), comprenant le fait :
d'envoyer une requête demandant un message d'un premier site Web (118) à partir d'un navigateur (112, 212) opérant sur le dispositif portatif audit serveur mandataire ;
d'envoyer la requête du serveur mandataire à la passerelle de Service de Données Mobile (218) par le biais d'un réseau sans fil (224) ;
d'envoyer la requête de la passerelle de Service de Données Mobile audit premier site Web ;
de recevoir une réponse du premier site Web à la passerelle de Service de Données Mobile (218), où si le message n'est pas disponible à partir du premier site Web :
ladite réponse va englober une réponse de redirection comportant une adresse du message, et ledit procédé comprend en outre le fait:
d'envoyer une requête de redirection demandant le message à un deuxième site Web (120) à ladite adresse par la passerelle de Service de Données Mobile et en réponse à celle-ci de recevoir le message au niveau du serveur intermédiaire ; et
d'envoyer le message de la passerelle de Service de Données Mobile au serveur mandataire par le biais du réseau sans fil ; et
d'envoyer une notification comportant l'adresse du message du serveur mandataire au navigateur indiquant qu'une redirection s'est produite dans la passerelle de Service de Données Mobile ; et
de recevoir une deuxième requête du navigateur au serveur mandataire demandant le message et en réponse à celle-ci d'envoyer le message au navigateur.

9. Procédé de la revendication 8, dans lequel la requête comporte plusieurs en-têtes, et où le procédé comprend en outre, dans le serveur mandataire, le fait :
d'examiner chacun des en-têtes de la requête ;
de retirer tout en-tête de la requête qui n'est pas accepté par la passerelle de Service de Données Mobile ;
d'ajouter à la requête tous nouveaux en-têtes demandés par la passerelle de Service de Données Mobile ; et
de marquer les en-têtes restants dans la requête et les nouveaux en-têtes ajoutés à la requête.

10. Procédé de la revendication 9, comprenant en outre dans la passerelle de Service de Données Mobile le fait de démarquer les en-têtes restants dans la requête et les nouveaux en-têtes ajoutés à la requête.

11. Procédé de la revendication 8, dans lequel le message reçu par la passerelle de Service de Données Mobile comporte un ou plusieurs en-têtes et où le procédé comprend en outre le fait de marquer les en-têtes du message dans la passerelle de Service de Données Mobile.

12. Procédé de la revendication 11, dans lequel le procédé comprend en outre, dans le serveur mandataire, le fait :
d'examiner chacun des en-têtes du message ;
de démarquer chacun des en-têtes du message ;
de retirer tout en-tête du message qui n'est pas accepté par le navigateur ; et
d'ajouter tous nouveaux en-têtes attendus par le navigateur au message.

13. Procédé de la revendication 8, dans lequel la requête est une requête de protocole utilisant une connexion TCP.

14. Procédé de la revendication 8, dans lequel la requête est une requête de protocole utilisant un protocole UDP.
